# EUROPEAN PATENT APPLICATION

(11) **EP 4 593 402 A1**
(43) Date of publication of application: **30.07.2025**
(21) Application number: 24382079.2
(22) Date of filing: 26.01.2024
(51) Int. Cl.: H04N 23/51

(54) **ELECTRONIC DEVICE AND METHOD FOR ASSEMBLING AN ELECTRONIC DEVICE**

(71) Applicant: Ficosa Automotive, S.L.U., 08028 Barcelona (ES)
(72) Inventor: ALCALDE GARCÍA, Francisco, 08232 VILADECAVALLS (ES)
(74) Representative: ZBM Patents - Zea, Barlocci & Markvardsen

(57) **Abstract**

The electronic device (100) comprises a housing assembly (110) extending along a longitudinal axis (O) and comprising a first housing part (120) and a second housing part (130) configured to be attached to each other through an interference fit, and an electronics carrier (140) received within an inner space (115) of the housing assembly (110) defined when the first and second housing parts (120, 130) are attached to each other.

## Description

The present disclosure relates to an electronic device such as, but not limited to, a camera module for vehicles comprising a housing assembly within which at least an electronics carrier is received. The housing assembly comprises a first housing part and a second housing part attached to each other by an interference fit. It further relates to a method for assembling an electronic device by an interference fit.

### BACKGROUND

Electronic devices, for example, camera modules for motor vehicles or vehicle camera devices, comprising a housing assembly formed of two or more housing parts, are known in the automotive sector. In use, when joined to each other, the housing parts define together an inner space where an electronics carrier provided with electronic components, at least one image sensor, a camera lens, etc. are suitably received.

The housing assembly extends along a longitudinal axis. The housing assembly usually comprise a first housing part, also referred to as front housing, and a second housing part, also referred to as back housing. Both the first housing part and the second housing part may be alternatively referred to as side housing parts when joined to each other side by side with respect to the longitudinal axis of the housing assembly. In any case, the front housing, the back housing, and the side housings in prior art devices have been generally made of plastics.

The first housing part and the second housing part are usually joined together by means of fasteners, for example, screws. However, attachment of the first housing part and the second housing part through fasteners is time consuming and involves complex assembly operations.

When it comes to camera modules, for example for vehicle camera devices, they typically include the electronics carrier comprising electronic components which are increasingly powerful. As a result, great amounts of heat are generated inside the housing assembly. In order to dissipate heat as quickly as possible to the outside of the housing assembly, housing parts made of plastics have been more recently replaced with housing parts made of metal.

Furthermore, the image sensor is coupled to the electronics carrier. In order to ensure good image quality, the first housing part and the second housing should be joined together such that a lens assembly and the image sensor are optically aligned with respect to each other. It is critical that the lens assembly and the image sensor remain both optically aligned over the service life of the camera module such that optical communication is not lost.

Usually, the electronics carrier is mechanically fixed to the front housing by means of fasteners, for example, screws passing through the material of the electronics carrier as disclosed, for example, in WO2006136208 A1 and US20140036084 A1. As stated above, the use of screws has been found to be undesirable as it is complex and time consuming in assembly operations.

Despite the above, a need still remains for electronic devices, and more particularly camera modules, in which attachment of housing parts is properly ensured during use while preventing damages to electronics components within the housing assembly and without increasing costs.

Throughout the present description, in use refers to a condition of the electronic device, such as a camera module, for example, for a vehicle camera device, in which the device is ready for operation, with the first housing part and the second housing part joined to each other.

### SUMMARY

An aspect of the present invention relates to an electronic device, such as, but not limited to, a camera module for vehicles. In fact, the electronic device may be a vehicle camera device.

It is an object of the present invention to provide the electronic device comprising:
- a housing assembly that comprises a first housing part and a second housing part configured to be attached to each other, in use, defining an inner space therein; and
- an electronics carrier arranged at least partially within the inner space.

The first housing part and the second housing part are attached to each other by an interference fit.

The interference fit or pressed fit or friction fit may be defined as a form of attachment between at least the first and second housing parts that produces a joint which is held together by friction, i.e. dimensional interference, after the first and second housing parts are pushed together. As explained further below, the friction or dimensional interference may cause a deformation, e.g., elastic deformation, of the first and/or second housing parts.

The housing assembly extends along a longitudinal axis. As explained further below, when the electronic device is a camera module, the longitudinal axis may be coincident or parallel to an optical axis. The first housing part may be also referred herein to as front housing, and a second housing part may also be referred herein to as back housing.

The housing assembly may comprise a first overlap portion and a second overlap portion which overlap to each other in a direction perpendicular to the longitudinal axis. The first housing part may comprise the first overlap portion. Further, the second housing part may comprise the second overlap portion.

In use, the first overlap portion may include a first interference surface, and the second overlap portion may include a second interference surface that may be arranged coincident to the first interference surface. Also, the first interference surface may be arranged parallel to the longitudinal axis.

The interference fit may extend along an interface surface. Said interface surface may be defined by the first and second overlap portions when in (direct) contact as the first and second housing parts are attached to each other. In fact, the interface surface may be defined by the common area of the first and second interference surfaces.

In short, the interface surface may be defined by the first and second overlap portions, e.g., the first and second interference surfaces, when the first and second housing parts are attached to each other.

The first overlap portion may comprise an outer lateral surface of the first housing part, an inner lateral surface of the first housing part, and an end surface connecting said outer lateral surface and inner lateral surface. The outer lateral surface and/or the inner lateral surface may be arranged substantially parallel to the longitudinal axis. Also, the second overlap portion may comprise an outer side surface of the second housing part, an inner side surface of the second housing part, and an end surface connecting said outer side surface and inner side surface.

In use, the interference fit may be obtained by the (direct) contact or abutment between:
- the outer lateral surface of the first housing part and the inner side surface of the second housing part; or
- the outer side surface of the second housing part and the inner lateral surface of the first housing part.

In other words, the interface surface may be defined in the outer side surface of the first housing part and the inner side surface of the second housing part. Or, alternatively, the interface surface may be defined in the outer side surface of the second housing part and the inner lateral surface of the first housing part.

As explained, the second housing part may comprise the interface surface adapted for abutting and frictionally grabbing the first housing part when the first housing part is at least partially inserted into the second housing part so as to provide the interference fit (thereby securing the first housing part to the second housing part). Alternatively, the first housing part may comprise the interface surface adapted for abutting and frictionally grabbing the second housing part when the second housing part is at least partially inserted into the first housing part so as to provide the interference fit (thereby securing the second housing part to the first housing part).

In any case, at least a portion of the first housing part, e.g., the first overlap portion, and/or a portion of the second housing part, e.g., the second overlap portion, may be capable of elastically deforming at least in a direction perpendicular to the longitudinal axis when the first housing part is at least partially inside the second housing part, or when the second housing part is at least partially inside the first housing part. Of course, it is possible that the first overlap portion and/or the second overlap portion operate(s) in plastic deformation.

Once the first housing part is at least partially inserted into the second housing part, the outer lateral surface of the first housing part is closer to the longitudinal axis than the inner side surface of the second housing part adapted for providing the interference fit. Also, once the second housing part is at least partially inserted into the first housing part, the outer side surface of the second housing part is closer to the longitudinal axis than the inner lateral surface of the first housing part adapted for providing the interference fit.

The first housing part may extend longitudinally from a first end to a second end according to the longitudinal axis. The first housing part may comprise a lateral portion. The lateral portion may include the first overlap portion. Further, the lateral portion may extend in a direction parallel to the longitudinal axis. Preferably, the lateral portion may be one or more sidewalls. Also, the first housing part may further comprise a front portion connected to the lateral portion. The front portion may be arranged at or near the first end. Further, at least a portion of the front portion may extend in a direction perpendicular to the longitudinal axis. In particular, the front portion includes an orifice where a lens assembly may partially extend through and a housing flange that projects towards the longitudinal axis, e.g., the optical axis. Thus, said lens assembly may be at least partially disposed in the space formed in the interior of the first housing part at or near the first end. As stated above, the first housing part, e.g. the lateral portion, may comprise the outer lateral surface, the inner lateral surface, and the end surface connecting the outer lateral surface and the inner lateral surface. Said end surface may be the second end. In use, a space may be formed in an interior of the first housing part when the first and second housing parts are joined to each other. The lens assembly may be at least partially disposed in the space formed in the interior of the first housing part at or near the first end.

The second housing part may extend longitudinally from a first end to a second end according to the longitudinal axis. The second housing part may comprise a side portion. The side portion may include the second overlap portion. Further, the side portion may extend in a direction parallel to the longitudinal axis. Preferably, the side portion may be one or more sidewalls. Also, the second housing part may further comprise a rear portion connected to the side portion. The rear portion may be arranged at or near the first end. Further, at least a portion of the rear portion may extend in a direction perpendicular to the longitudinal axis. As stated above, the second housing part, e.g., the side portion, may comprise the outer side surface, the inner side surface, and the end surface connecting the outer side surface and the inner side surface. Said end surface may be the second end. In use, a space may be formed in an interior of the second housing part when the first and second housing parts are joined to each other. Also, the electronics carrier may be arranged therebetween the front portion and the back portion.

Inner and outer surfaces may be defined within the meaning of the present disclosure as surfaces facing the interior and the exterior, respectively, of the first housing part or the second housing part.

Also, within the meaning of the present disclosure, the lateral surface refers to a longitudinal surface of the first housing part. Analogously, the side surface refers to a longitudinal surface of the second housing part that is at least substantially parallel to the longitudinal axis of the housing assembly. The lateral surface of the first housing part and the side surface of the second housing part may comprise the above-mentioned first a second overlap portions respectively.

Also, within the meaning of the present disclosure, an end surface refers to a surface of the first housing part or the second housing part at least perpendicular or at least substantially angled to the longitudinal axis of the housing assembly, such as, for example, at least substantially parallel to the front portion or the rear portion.

As explained, at least a portion of the lateral portion and the side portion may be overlapped in a direction perpendicular to the longitudinal axis. In use, the interference fit may be obtained by a contact or abutment between the lateral portion and the side portion. More preferably, said contact or abutment between the lateral portion and the side portion occurs at or near the end surface (of the side portion) of the second housing part, e.g., at or near the above-mentioned second end of the second housing part, when the first housing part is at least partially arranged (inserted) into the second housing part. Alternatively, said contact or abutment between the lateral portion and the side portion occurs at or near the end surface (of the lateral portion) of the first housing part, e.g., at or near the above-mentioned second end of the first housing part, when the second housing part is at least partially arranged (inserted) into the first housing part.

Preferably, the lateral portion of the first housing part may comprise at least two straight lateral surfaces. In turn, said at least two straight lateral surfaces may comprise a first straight lateral surface and a second straight lateral surface, wherein both first and second straight lateral surfaces include the first overlap portion. The first straight lateral surface may be arranged parallel to the longitudinal axis. Further, the first straight lateral surface may be arranged parallel and opposed to the second straight lateral surface. Similarly, the side portion of the second housing part may comprise at least two straight side surfaces. In turn, said at least two straight side surfaces may comprise a first straight side surface and a second straight lateral surface. The first straight lateral surface may be arranged parallel to the longitudinal axis. Further, the first straight side surface may be arranged parallel and opposed to the second straight side surface wherein both first and second straight side surfaces may include the second overlap portion. It may be preferred that housing assembly comprises a rectangular cross-sectional shape optionally provided with rounded edges.

It is preferred that the electronic device may be provided with one or more contact elevations that comprises the interface surface. The contact elevations may comprise the above-mentioned first and/or second interference surfaces. This is, each contact elevation may be a contact area formed between the first and second housing parts e.g., between the first and second overlap portions. Said contact elevations or ribs or ridges may be radial projections that project radially to the longitudinal axis, i.e. perpendicular to the longitudinal axis. In fact, said contact elevation may be integrally part of or attached to the first and/or the second housing part, e.g., the first and second overlap portions. Also, the contact elevations may preferably extend in a direction along the longitudinal axis. This is, a longitudinal axis of the plurality of ribs is substantially parallel to the longitudinal axis of the electronic device. It is preferred that the outer surface of the first housing part and/or the inner surface of the second housing part may comprise said plurality of contact elevations. Alternatively, the inner surface of the first housing part and/or the outer surface of the second housing part may comprise said plurality of contact elevations. The purpose of the one or more contact elevations is to improve the interference fit. In this way, it may be possible to control the strength of the interference fit and deformation of the contact surfaces (i.e. contact elevations).

It is even more preferred that the plurality of contact elevations may be provided to:
(i) the inner surface of the first and/or second (straight) lateral surface, and/or
(ii) the outer surface of the first and/or the second (straight) side surface.

Alternatively, the plurality of contact elevations may be provided to:
(i) the outer surface of the first and/or second straight lateral surface, and/or
(ii) the inner surface of the first and/or second straight side surface.

Preferably, a length of the interface surface along the longitudinal direction may be of between two and ten millimeters. The length of the interface surface provides stability to the electronic device. Therefore, the purpose of having a certain length of the interface surface (e.g., at least in the longitudinal axis) is that a greater stability may be advantageously achieved since it is not a contact point but a contact (straight) line. In the event that there is a blow, for example, to the lens assembly, it tends to turn (i.e. the optical alignment between the lens assembly and the electronics carrier may be lost). As explained further below, the lens assembly may be glued to the electronics carrier. In turn, the electronics carrier may be sandwiched as explained further below, for example, by the lens assembly and the second housing part. As the first and second housing parts may be attached together by the above-mentioned interference fit, if the length of the interface surface were small (e.g., similar to a contact point) the attachment of the first and second housings could end up being lost. An increase of the length of the interface surface causes an improvement of the stability of the electronic device and reduces the risk of losing the interference fit.

Further, once the electronics carrier is manufactured, its thickness may be different from the nominal thickness (manufacturing tolerances). Also, once the first and second housing parts are manufactured, the dimensions of both housing parts along the longitudinal axis may be different from the nominal dimensions (manufacturing tolerances). As the interference fit is to be ensured, it is preferred that the length of the interface surface along the longitudinal axis is greater than the thickness of the electronics carrier.

The housing assembly may comprise electrically conductive material. More preferably, at least one of the first and second housing parts of the housing assembly may be made of metal, preferably, comprising at least aluminum or Zamak alloy. Other materials or combinations thereof are possible. The first and second housing parts may be made of the same or different materials. A reduced electromagnetic interference (EMI) is advantageously obtained if the first and second housing parts are made of electrically conductive material.

When interference fit of the first and second housing parts is obtained, friction occurs which unfortunately may cause the generation of chips falling from the housing assembly, i.e. electrically conductive material of the housing assembly being detached thereof. As a consequence, said material may come off from the first and second housing parts and fall onto the electronics carrier. If so, the electrically conductive material that comes into contact with the electronics carrier may damage its electronic components (short circuit).

The electronic device may further comprise an elastic means. The elastic means may be made of elastic material. Thus, the elastic means may be any unit, device, or component that comprises an elastic material or an elastic structure capable of being deformed at least in a direction perpendicular to the longitudinal axis. The elastic means may be adapted for being elastically deformed as required so as to prevent the above-mentioned material detached from the first and/or second housing part from coming into contact with the electronics carrier.

Preferably, the elastic means may be a rubber gasket or a glue. In any case, the elastic means may contact or abut both the first and the second housing parts, e.g., the first and second overlap portions. More preferably, the elastic means may at least partially surround the outer lateral surface of the first housing part and abutting said outer lateral surface and the inner side surface of the second housing part; or alternatively, the elastic means may at least partially surround the outer side surface of the second housing part and abutting said outer side surface and the inner side surface of the first housing part.

The elastic means may be arranged between the interference fit, e.g., interface surface, and a plane XY that contains the electronics carrier. This is, the elastic means may be arranged in a pathway connecting the interference surface and the electronics carrier. In this way, the elastic means may be adapted for preventing electrically conductive material of the housing assembly from entering into contact with electronic components of the electronics carrier when said electrically conductive material is detached when the first and second housing parts are attached to each other by interference fit. Additionally, the elastic means may be adapted for preventing foreign matter such as dust, powder or liquids from coming into contact with the electronics carrier. Thus, the first and second housing parts may be sealingly attached together.

Furthermore, a gap may be defined between:
- the outer lateral surface of the first housing part and the inner side surface of the second housing part; or
- the outer side surface of the second housing part and the inner side surface of the first housing part.

It may be preferred that the first overlap portion and/or the second overlap portion may include a region that extends perpendicular to the longitudinal axis such that, in use, the first overlap portion and the second overlap portion may define the gap. More preferably, the lateral portion and/or the side portion may comprise said region such that, in use, the lateral portion and the side portion may define said gap.

It is even more preferred that the gap is defined between an inner side surface of the second housing part and the outer lateral surface of the first housing part; or between the inner lateral surface of the first housing part and the outer lateral surface of the second housing part. This is, the gap may be formed between one or more sidewalls of the first housing part and one or more sidewalls of the second housing part. Thus, the elastic means is preferably provided, e.g., fitted, in said gap such that the first and second housing parts are sealingly joined together.

It is preferred that the electronic device of the present disclosure is a camera module. The camera module may comprise the lens assembly and an image sensor also known as imager. The lens assembly may be at least partially inserted in the housing, e.g., the first housing part. The lens assembly may be arranged extending along the longitudinal axis and defines an optical axis. In particular, said longitudinal axis is coincident or parallel to the optical axis of the lens assembly. Also, the image sensor may be coupled to the electronics carrier. In use, the image sensor may be in optical communication with the lens assembly so as to acquire a captured image.

The electronics carrier may comprise at least one printed circuit board, e.g., a first printed circuit board. The electronics carrier, e.g., the first printed circuit board, may comprise a first and second opposed parallel surfaces preferably arranged substantially perpendicular to the longitudinal axis. The first surface of the electronics carrier is closer to the lens assembly than the second surface. The image sensor may be attached to the first surface.

The electronics carrier may possibly comprise a second printed circuit board. If so, the first and second printed circuit boards may preferably be arranged spaced apart along the optical axis. Further, the first and second printed circuit boards may be electrically connected to each other by means of a connector device that may be, for example, a board-to-board connector.

The lens assembly may be (directly) attached to the electronics carrier, preferably by a first adhesive means. Further, the lens assembly may further comprise a lens flange projecting radially outwards from the lens assembly perpendicular to the longitudinal axis. In use, the lens flange and a surface of the housing assembly may be capable of being attached to each other. Preferably, the lens flange and an inner surface of the housing assembly, e.g., an inner surface of the first housing part, may be capable of being attached to each other by a second adhesive means. In fact, the second adhesive means is arranged between the lens flange and the outer or the inner surface of the housing flange of the first housing part. The second adhesive means may be cured. In use, once the lens assembly and the electronics carrier are adhered, e.g., glued, together, the optical communication is established between the lens assembly and the image sensor.

The electronics carrier may be arranged sandwiched by the first contact portion and the second contact portion. The first contact portion may be part of or attached to the first housing part or the lens assembly. Further, the second contact portion may be part of or attached to at least of one of the second housing part, a connector device, and a spacer. The spacer may be any device or component adapted for fixing at least two printed circuit boards to each other being spaced apart along the longitudinal axis. Indeed, the electronics carrier may be tightly sandwiched in the inner space. In use, a (clamping) force when attaching the first housing part and the second housing part may be generated and applied to the electronics carriers resulting in the electronics carrier being sandwiched under pressure. It serves the purpose of fixing the electronics carrier without fasteners. Further, the first and/or the second contact portion may comprise thermal and/or electrical conductors. It helps reduce the electromagnetic influence (EMI) of the electronics device and increase the heat dissipation of the electronics carrier.

As stated above, each contact portion may provide a contact pressure applied to corresponding first and second surfaces of the electronics carrier. The contact pressure may provide a force component substantially perpendicular to the first or second surfaces of the electronics carrier. In use, the first and second housing parts may be configured to be attached to each other by the above-mentioned interference fit, being the electronics carrier with an electronics carrier interference fit. For this purpose, the electronics carrier interference fit is adapted to keep the electronics carrier tightly clamped in the direction parallel to the longitudinal axis, or perpendicular to the first and second surfaces of the electronics carrier. It is worth noting that there are two interference fits in the present disclosure: the (housing) interference fit for attaching the first and second housing part to each other, and the (electronics carrier) interference fit for providing the sandwiching / clamping effect of the electronics carrier. Both interreference fits have synergistic effect since the fixation of the electronics carrier depends on the attachment of the first and second housing parts. That is, the attachment of the first and second housing parts allows the electronics carrier to be tightly clamped, where the image sensor is in optical alignment with the lens assembly. The fixation of the electronics carrier is achieved without using fasteners. Also, the attachment of the first and second housing parts are is performed without fasteners.

At least one of the first housing part and the second housing part may be electrically connected to the electronics carrier, preferably, both housing parts. It is preferred that the first and second housing parts are electrically connected to each other.

The electronics carrier may comprise a first electrically conductive portion on its first surface, and a second electrically conductive portion on its second surface. Further, the first housing part (or the lens assembly) may contact at least the first electrically conductive portion and the second housing part may contact at least a second electrically conductive portion. In particular, the above-mentioned first contact portion presses the first electrically conductive portion, wherein the second contact portion presses the second electrically conductive portion. In use, the first housing part and the second housing part may be electrically connected to the electronics carrier. Both the first electrically conductive portion and the second electrically conductive portion may be formed adjacent an edge of the electronics carrier. More preferred, the first and second conductive portions may be made of copper, tin, silver, gold, or a combination thereof and optionally may be of the order of 0.8 mm wide.

With the particular configuration described herein, an extremely lightweight electronic device is achieved whose complexity and costs are advantageously reduced. An important technical effect is that dissipation of heat generated by the electronic parts fitted within the housing assembly is highly improved. Furthermore, electromagnetism properties are also enhanced, particularly, when the first and housing parts are made of metal such as aluminum or Zamak and, more in particular, when the electronics carrier is electrically connected to the first housing part and/or the second housing part, being the first and second housing parts electrically connected to each other. According to preferred examples, the first and second housing parts form an enclosure that acts as a Faraday Cage.

Sandwiching of the electronics carrier along the longitudinal axis is advantageous in the manufacturing process since no fasteners are employed for fixing the electronics carrier. Tolerances, costs and time are consequently reduced. In addition, interference fit of the electronics carrier results in that the electronics carrier and one or more of the first housing part, and the second housing part can be arranged with direct contact with each other when in use. This greatly improves heat dissipation without increasing costs to the extent that the housing assembly is capable of suitably withstanding the heat generated by electronics components received within the housing assembly.

According to an aspect of the present invention, a method for assembling an electronic device is also disclosed herein. The method may comprise:
- preferably, coupling an image sensor to an electronics carrier;
- preferably, providing a first adhesive means on at least one of a lens assembly and the electronics carrier;
- preferably, attaching the lens assembly and the electronics carrier to each other so as to establish an optical communication between the lens assembly and the image sensor;
- preferably, coupling a connector device to the electronics carrier;
- preferably, placing the electronics carrier onto a second contact portion, wherein said second contact portion is part of or attached to at least of one of a second housing part, the connector device, and a spacer;
- preferably, providing a second adhesive means on at least one of a lens flange of the lens assembly and a surface of the first housing part;
- preferably, attaching the lens assembly to the first housing part;
- preferably, providing an elastic means abutting an overlap portion of the first housing part and an overlap portion of the second housing part such that the elastic means may be deformed in a direction perpendicular to the longitudinal axis when abutting the first and the second housing parts;
- moving the first housing part and the second housing part relative to each other along the longitudinal axis; and
- attaching the first housing part and the second housing part to each other by an interference fit such that the electronics carrier is preferably further arranged sandwiched by a first contact portion and the second contact portion, wherein the first contact portion is part of or attached to the lens assembly or the first housing part.

If the electronics carrier has two or more printed circuit boards, the method may further comprise the step of providing a connector device such as a board-to-board connector for electrically connecting the first and second printed circuit boards to each other.

For reasons of completeness the following clauses are provided:
Clause 1.- A camera module for vehicles comprising:
   - a housing assembly comprising a first housing part and a second housing part configured to be attached to each other;
   - an electronics carrier received within an inner space of the housing assembly defined when the first and second housing parts are attached to each other;
   - a lens assembly being in optical communication to an image sensor coupled to the electronics carrier so as to acquire a captured image,
   wherein, in use, the electronics carrier is arranged tightly sandwiched by a first contact portion and a second contact portion
   - the first contact portion being at least one of the lens assembly and the first housing part; and
   - the second contact portion being at least one of the second housing part, a connector device, and a spacer.
Clause 2.- The camera module of clause 1, wherein the lens assembly and the electronics carrier are attached to each other, optionally, by a first adhesive means.
Clause 3.- The camera module of clauses 1-2, wherein the lens assembly is attached to the first housing part.
Clause 4.- The camera module of clauses 1-3, wherein the first housing part comprises a first overlap portion, wherein the second housing part comprises a second overlap portion which overlaps the first overlap portion in a direction perpendicular to an optical axis defined by the lens assembly, and wherein an attachment of the first housing part and the second housing part is performed at the first and second overlap portions.
Clause 5.- The camera module of clause 4, wherein the first housing part comprises a lateral portion that includes the first overlap portion, and wherein the second housing part comprises a side portion that includes the second overlap portion.
Clause 6.- The camera module of clause 5, wherein the attachment of the first housing part and the second housing part is performed by an interference fit or by an attaching means.
Clause 7.- The camera module of clause 6, wherein the interference fit extends along an interface surface defined by the first and second overlap portions.
Clause 8.- The camera module of clause 6, wherein the attaching means is a welding means or an adhesive means such as a glue.
Clause 9.- The camera module of clause 8, wherein the attaching means is arranged at least on
   - the outer lateral surface of the first overlap portion and an end surface of the second overlap portion, wherein the outer lateral surface of the first overlap portion is arranged parallel to the optical axis; or
   - an outer side surface of the second overlap portion and an end surface of the first overlap portion, wherein the outer side surface of the second overlap portion is arranged parallel to the optical axis.

### BRIEF DESCRIPTION OF THE DRAWINGS

Non-limiting examples of the present electronic device will be described in the following, with reference to the appended drawings.

In the drawings:
Figure 1 is a cross-sectional view of an example of a camera module for vehicles where the front housing is at least partially arranged in the back housing, and where the electronics carrier is sandwiched by the lens assembly and the back housing;
Figure 2 is a cross-sectional view of an example of a vehicle camera module where the back housing is at least partially arranged in the front housing, and where the electronics carrier is sandwiched by the lens assembly and the back housing;
Figure 3 is a cross-sectional view of an example of a camera module for vehicles where the front housing is at least partially arranged in the back housing, and where the electronics carrier is sandwiched by the front housing and the back housing;
Figure 4 is a cross-sectional view of an example of a vehicle camera module where the back housing is at least partially arranged in the front housing, and where the electronics carrier is sandwiched by the front housing and the back housing;
Figure 5 is an enlarged fragmentary cross-sectional view of the vehicle camera module shown in figure 2;
Figure 6 is an exploded view of the example of the vehicle camera module shown in figure 2;
Figure 7 is a view that shows a plurality of contact elevations adapted for performing the interference fit of the front and back housings;
Figure 8 is a general perspective view of one example of the present electronic device corresponding to a camera module for vehicles;
Figure 9 is a perspective view that shows the back housing and an elastic means;
Figure 10 is a perspective view of the elastic means shown in figure 9;
Figure 11 is a top view of the electronics carrier provided with an electrically conductive portion on its first surface; and
Figures 12A, 12B, and 12C are schematic illustrations showing different examples of how the electronics carrier is tightly sandwiched.

### DETAILED DESCRIPTION OF EXAMPLES

With reference to the non-limiting examples shown in the figures of the drawings, a camera module for a vehicle is described herein as well as a method for assembling thereof (not shown).

The (vehicle) camera module shown in the figures comprises a housing assembly 110 extending along a longitudinal axis O. In the examples of the figures, the longitudinal axis O corresponds to an optical axis of a lens assembly 170.

The camera module includes an electronics carrier 140, a lens assembly 170, and an image sensor 150. The image sensor 150 is arranged in optical communication with the lens assembly 170. Furthermore, the image sensor 150 is coupled to the electronics carrier 140 so as to acquire a captured image.

The lens assembly 170 extends along the longitudinal axis O. The lens assembly 170 is particularly configured for guiding the light into the image sensor 150. The lens assembly 170 comprises a lens body and a lens barrel (not shown). The lens barrel is adapted to receive the lens body. In particular, the lens barrel is adapted for receiving a number of optical elements arranged one after the other along the direction of the optical axis.

The front housing 120 extends longitudinally from a first end to a second end according to the longitudinal axis O. The front housing 120 comprises an outer surface, a bottom surface or end surface disposed at or near the second end, and an inner surface being formed in the inner space 115 of the housing assembly 110 when the front and back housings 120, 130 are attached to each other. In particular, the front housing 120 comprises a front portion 128 at or near the first end and being perpendicular to the longitudinal axis O, and a lateral portion 129 extending along the longitudinal axis O. Particularly, the lateral portion 129 may comprise one or more sidewalls. The front portion 128 includes an orifice where the lens assembly 170 partially extends through and a flange that projects towards the optical axis O. In use, the lens assembly 170 is at least partially disposed in the inner space 115 of the housing assembly 110.

The back housing 120 comprises a rear portion 138 being arranged perpendicular to the longitudinal axis O, and a side portion 139 extending along the longitudinal axis O. Particularly, the rear portion 138 includes an opening where the connector device 400 (or a device connected to said connector device 400) partially extends through.

The electronics carrier 140 is received within the inner space 115 of the housing assembly 110 defined when the first and second housing parts 120, 130 are attached to each other. In fact, the front housing 120 and the back housing 130 are electrically connected to each other and to the electronics carrier 140 as explained further below.

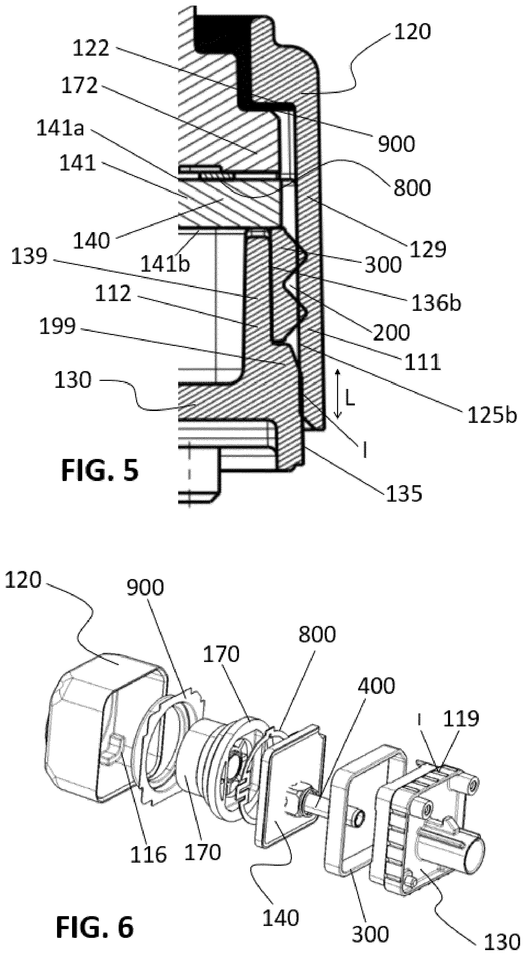

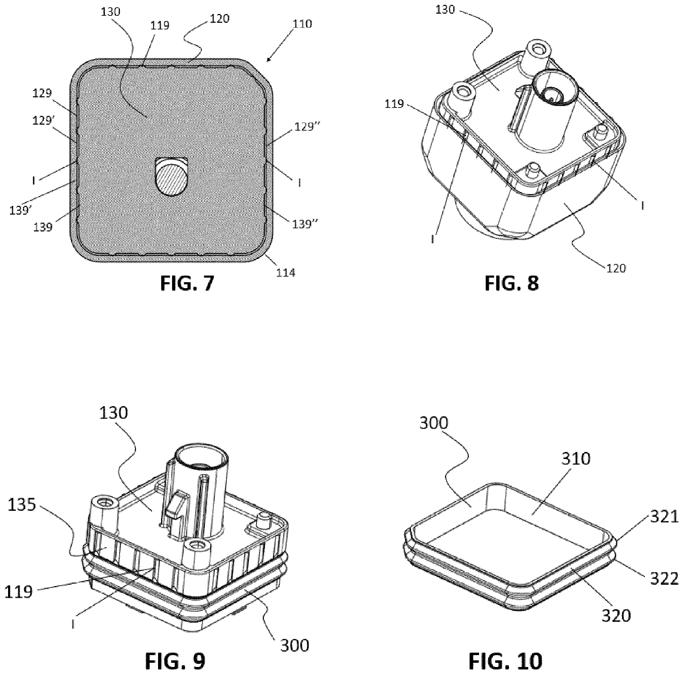

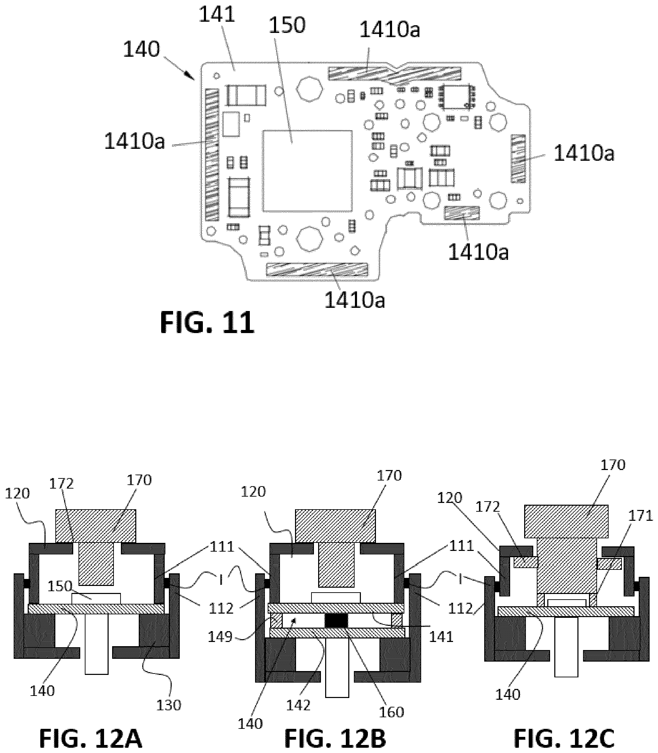

In examples, the electronics carrier 140 comprises a first printed circuit board 141. The first printed circuit board 141 may be provided within the inner space 115. The first printed circuit board 141 is contained in a plane XY (not shown). The first printed circuit comprises a first (main) surface 141a and a second (main) surface 141b (see figure 5) parallel and opposed to each other. In particular, the image sensor 150 is coupled to the first surface 141a. According to examples, it is possible that the electronics carrier 140 further comprises a second printed circuit board 142 (see figure 12B). If provided, the first and second printed circuit boards 141, 142 are spaced apart along and substantially perpendicular to the longitudinal axis O. Both the first and second printed circuit boards 141, 142 are provided within the inner space 115. As shown in figure 12B, the second printed circuit board 142 is arranged further away from the lens assembly 170 than the first printed circuit board 141. Still in figure 10B, a board-to-board connector 160 is provided for electrically connecting the first and second printed circuit boards 141, 142 to each other. The board-to-board connector 160 may contribute to the sandwiching effect of the first and second printed circuit boards 141, 142 as will be explained further below. Thus, the first and/or the second printed circuit boards 141, 142 may be sandwiched by the board-to-board connector 160 and at least one of the front and back housings 120, 130.

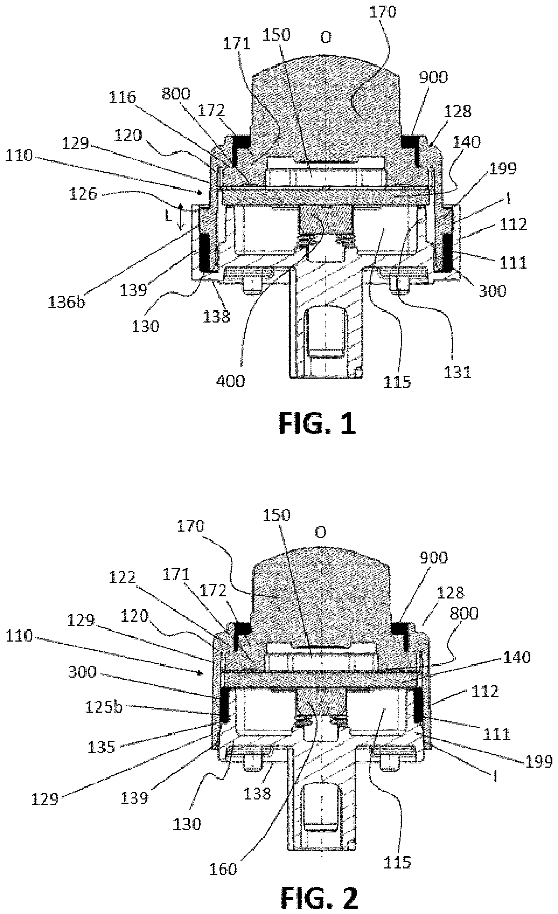

Figures 1 to 4 show a camera module where the front housing 120 and the back housing 130 are attached to each other by an interference fit. In this way, the interference fit produces an attachment of the front and back housing 120, 130 to hold them together by friction after said front and back housings 120, 130 are pushed together.

As shown, the lateral portion 129 and the side portion 139 are overlapped to each other in a direction perpendicular to the longitudinal axis O. The lateral and side portions 129, 139 comprise the first and second overlap portions 111, 112 respectively.

The interference fit extends along an interface surface I. Said interface surface I is defined by the abutment of the first overlap portion 11 and the second overlap portion 112 when the front and back housings 120, 130 are attached to each other.

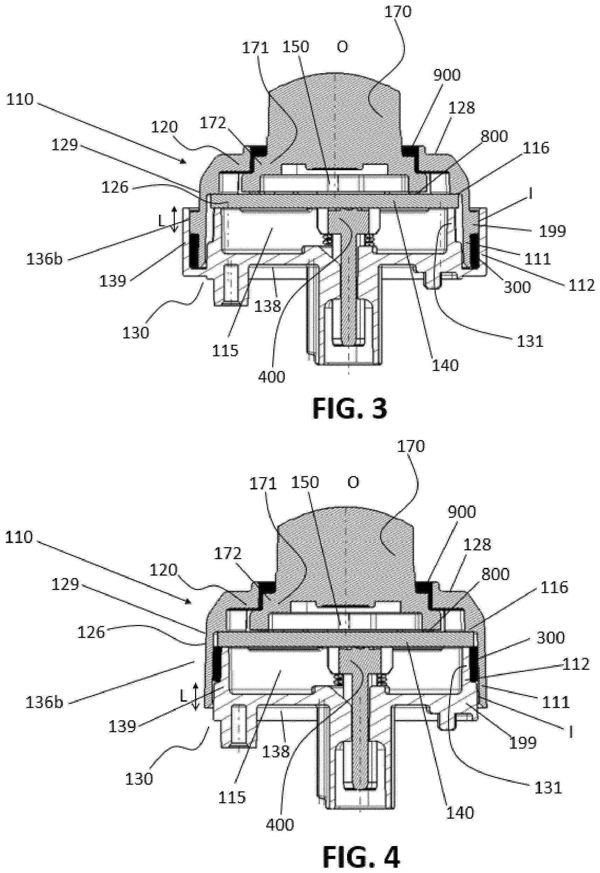

Figure 1 shows that the side portion 139 of the back housing 130 is adapted for abutting and frictionally grabbing the lateral portion 129 of the front housing 120 when the front housing 120 is partially inserted into the back housing 130 so as to provide the interference fit thereby securing the front housing 120 to the back housing 130. Once the front housing 120 is partially inserted into the back housing 130, an outer lateral surface 126 of the lateral portion 129 is closer to the longitudinal axis O than an inner side surface 136b of side portion 139 adapted for providing the interference fit. Therefore, as shown in figures 1 and 3, the interference fit is obtained by the direct contact or abutment between the outer lateral surface 126 of the lateral portion 129 and the inner side surface 136b of the side portion 139. In the example of figures 1 and 3, the lateral portion 129 is adapted for elastically deforming inward towards a direction perpendicular to the longitudinal axis O and/or the side portion 139 is adapted for elastically deforming outward towards a direction perpendicular to the longitudinal axis O when the front housing 120 is being at least partially introduced into the back housing 130.

Alternatively, figures 2 and 4 show that the lateral portion 129 of the front housing 120 is adapted for abutting and frictionally grabbing the side portion 139 of the back housing 130 when the back housing 130 is partially inserted into the front housing 120 so as to provide the interference fit thereby securing the back housing 130 to the front housing 120. Once the back housing 130 is partially inserted into the first housing 120, an outer side surface 135 of the side portion 139 is closer to the longitudinal axis O than an inner lateral surface 125b of the lateral portion 129 adapted for providing the interference fit. Therefore, as shown in figures 2 and 4, the interference fit is obtained by the direct contact or abutment between the outer side surface 135 of the side portion 139 and the inner lateral surface 125b of the lateral portion 129. In the example of figure 2 and 4, the side portion 139 is adapted for elastically deforming inward towards a direction perpendicular to the longitudinal axis O and/or the lateral portion 129 is adapted for elastically deforming outward towards a direction perpendicular to the longitudinal axis O when the back housing 130 is being at least partially introduced into the front housing 120.

Figure 7 shows that the lateral portion 129 of the front housing 120 comprises a first straight lateral surface 129' and a second straight lateral surface 129" according to the example of figure 2. The first straight lateral surface 129' extends parallel to the longitudinal axis O. Further, the first straight lateral surface 129' is arranged opposite to the second straight lateral surface 129". Similarly, the side portion 139 of the back housing 130 comprises a first straight side surface 139' and a second straight lateral surface 139". The first straight lateral surface 139' extends parallel to the longitudinal axis O. Further, the first straight side surface 139' is arranged opposite to the second straight side surface 139". As shown, the first straight side surface 139' is parallel or coincident to the first straight lateral surface 129', wherein the second straight side surface 139" is parallel or coincident to the second straight lateral surface 129". In particular, it is shown that the front housing 120 and/or the back housing 130 has at least two pairs of opposite straight surfaces that are parallel. More in particular, figure 5 shows that housing assembly 110 comprises a rectangular cross-sectional shape provided with rounded edges 114. It should be noted that the housing assembly of the camera module of the example of figure 1 also comprises the rectangular cross-sectional shape provided with rounded edges. It maximizes the size of the inner space 115.

Particularly, the interface surface I is defined by the direct contact of
(i) the first straight lateral surface 129' and the first straight side surface 139', and
(ii) the second straight lateral surface 129" and the second straight side surface 139".

As shown in figures 6 to 9, the camera module is provided with a plurality of contact elevations 119. Said contact elevations 119 or ribs or ridges are radial projections that project radially to the longitudinal axis O, i.e. perpendicular to the longitudinal axis O. The contact elevations 119 are particularly adapted for providing the interference fit. Each of the plurality of contact elevations 119 is a contact area that may be formed between the front and back housings 120, 130. According to a non-limiting example, said contact elevations 119 are integrally part of the back housing 130 and/or the front housing 120 (not shown). Also, the contact elevations 119 extend straight in a direction parallel to the longitudinal axis O. In particular, the outer lateral surface 126 of the lateral portion 129 and/or the inner side surface 136b of the side portion 139 comprises the plurality of contact elevations 119. Alternatively, the outer side surface 135 of the side portion 139 and/or the inner lateral surface 125b of the lateral portion 129 comprises the plurality of contact elevations 119.

As shown in figure 5, a length L of the interface surface along the longitudinal direction O is of between two and ten millimeters. It provides stability to the camera module. In the event that there is a blow, for example, to the lens assembly 170, it tends to turn, particularly when the lens assembly 170 is glued to the first printed circuit board 141 through a first adhesive means 800 as will be described further below. In turn, the first printed circuit board 141 is sandwiched when the front and back housings 120, 130 are attached to each other as will be explained further below. As the front and back housings 120, 130 are attached together by interference fit, if the length L of the interface surface were small, e.g., similar to a contact point, the attachment of the front and back housings 120,130 could end up being lost. An increase of the length L of the interface surface causes an improvement of the stability of the camera module and reduces the risk of losing the interference fit.

The housing assembly 110 is made of metal, for example, aluminum or Zamak alloy. Other materials or combinations are of course possible. If so, a reduced electromagnetic interference (EMI) is advantageously obtained.

When the interference fit of the front and back housings 120, 130 is obtained, friction occurs, and metal material may disadvantageously come off from the lateral portion 129 and/or side portion 139 which may fall onto the first printed circuit board 141. If so, it may damage the electronic components coupled to the first printed circuit board 141.

As shown in figures 1-6 and 9-10, the present camera module further comprises an elastic means 300. The elastic means 300 is made of elastic material. Thus, the elastic means 300 is, for example a (rubber) gasket or an adhesive means (e.g., glue) or any other unit as long as it is capable of being deformed at least in a direction perpendicular to the longitudinal axis O. Therefore, the elastic means 300 is adapted for being elastically deformed as required so as to prevent the metal material detached from the front and back housings 120, 130 from coming into contact with the first printed circuit board. Figure 5 shows that the elastic means 300 contacts or abuts both lateral portion 129 and the side portion 139. In particular, the elastic means 300 directly contacts the outer side surface 135 of the side portion 139 and the inner lateral surface 125b of the lateral portion 129. It is absolutely possible that, according to the example of figures 1 and 3, the elastic means 300 directly contacts the outer surface of the lateral portion 129 and the inner surface of the side portion 139. As shown in figure 5, the elastic means 300 is arranged between the interface surface I and a plane XY that contains the first printed circuit board 141. This is, the elastic means 300 be arranged in a pathway connecting the interface surface I and the first printed circuit board 141.

In this way, the elastic means 300 is adapted for preventing the metal material of the housing assembly 110 from entering into contact with electronic components of the first printed circuit board 141. Additionally, the elastic means 300 is further adapted for preventing foreign matter such as dust, powder or liquids from coming into contact with the first printed circuit board. Thus, the front and back housings 120, 130 are sealingly attached together.

Figures 9 and 10 show that the elastic means 300 is a seal, for example, formed from an elastomeric material, such as rubber. In use, the elastic means 300 is circumscribing or surrounding the outer side surface 135 of the side portion 139 when the back housing 130 is partially inserted into the front housing 120, or the elastic means 300 is circumscribing or surrounding the outer lateral surface 126 of the lateral portion 129 when the front housing 120 is partially inserted into the back housing 130. In particular, the elastic means 300 is disposed around the longitudinal axis O. More in particular, it is a one single component, for example, a rubber gasket. As shown, its inner surface 310 comprises four straight inner surfaces. Figure 10 shows that it particularly has at least two lip seals 321, 322, for example, on its outer surface 320. More particularly, it is shown that the elastic means 300 has at least two pairs of opposite straight surfaces that are parallel.

Referring back to figure 5, it is shown that a gap 200 is defined between the inner lateral surface 125b of the lateral portion 129 and the outer side surface 135 of the side portion 139. Alternatively, it is absolutely possible that the gap 200 is defined between the inner side surface 136b of the side portion 139 and the outer lateral surface of the lateral portion 129 (not shown).

Figures 2, 4 and 5 further show that the back housing 130, e.g., the side portion 139, comprises a region 199 that extends perpendicular outward relative to the longitudinal axis O such that, in use, the lateral portion 129 and the side portion 139 define the gap 200 in their overlapped portions. Alternatively, figure 1 and 3 show that the front housing 120, e.g., the lateral portion 129, comprises the region 199 that extends perpendicular outward relative to the longitudinal axis O defining thus the gap 200.

The non-limiting example shown in the drawings illustrates that the first printed circuit board 141 is tightly sandwiched in the inner space 115 by a first contact portion and a second contact portion. More specifically, as shown in figures 1-5, in use, the first surface 141a and the second surface 141b of the first printed circuit board 141 are sandwiched through a PCB interface fit.

In the examples of figures 1, 2 and 5, the first contact portion is the lens assembly 170, wherein the second contact portion is back housing 130. This is, the lens assembly 170 contacts a portion of a first surface 141a of the first printed circuit board 141 and the back housing 130, e.g., sidewall 131, contacts a portion of the second surface 141b of the first printed circuit board 141.

In the examples of figures 3 and 4, the first contact portion is the front housing 120, wherein the second contact portion is back housing 130. This is, an inner surface 116 of the front housing 120, e.g., the inner surface of the (front) housing flange, contacts a portion of the first surface 141a of the first printed circuit board 141, wherein the back housing 130, e.g., sidewall 131, contacts a portion of the second surface 141b of the first printed circuit board 141.

In examples of figures 1 and 2, the inner surface 116 of said front portion 128 abuts a lens flange 172 of the lens assembly 170 as explained further below. The inner surface 116 of the front housing 120 comprises the first contact portion that is, in particular, a thermal and/or electrical conductor. The inner side surface 136b of the back housing 130, e.g., the sidewall 131, comprises the second contact portion that is, in particular, a thermal and/or electrical conductor. In use, the sidewall 131 exerts a clamping force to the electronics carrier 140, e.g., the second surface 141b, wherein the lens assembly 170, e.g., the positioning portion 171, exerts a clamping force to the electronics carrier 140, wherein the lens assembly 170, e.g., the lens flange 172, receives a force parallel to the longitudinal axis O by the front housing part 120, e.g., the housing flange of the front portion 128.

In examples of figures 3 and 4, the inner surface 116 of the front portion 128 abuts the electronics carrier 140, e.g., the first surface 141a as explained further below. The inner surface 116 of the front housing 120 comprises the first contact portion that is, in particular, a thermal and/or electrical conductor. The inner side surface 136b of the back housing 130, e.g., the sidewall 131, comprises the second contact portion that is, in particular, a thermal and/or electrical conductor. In use, the sidewall 131 exerts a clamping force to the electronics carrier 140, e.g., the second surface 141b, wherein the front housing 120, e.g., the inner surface 116 of the front portion 128, exerts a clamping force to the electronics carrier 140, e.g., the first surface 141a, wherein the lens assembly 170, e.g., the positioning portion 171, is attached to the electronics carrier, e.g., the first surface 141a. For example, a second adhesive means 900 is applied therebetween the lens assembly 170, e.g., lens flange 172, and the front housing 120, e.g., the inner surface 116 of the front portion 118, after performing the sandwich of the electronics carrier 140 for sealing purposes. That is, to prevent foreign matter such as dust, powder or liquids from passing through the lens assembly 170 and the front housing 120.

In use, each of the first and second contact portions may provide a contact pressure applied to corresponding first and second surfaces 141a, 141b of the first printed circuit board 141. The contact pressure may provide a force component substantially perpendicular to the first or second surfaces 141a, 141b of the first printed circuit board 141.

It is preferred that the front and back housings 120, 130 are configured to be attached to each other by the interference fit, i.e. housing interference fit, being the first printed circuit board 141 with a PCB interference fit with the lens assembly 170 and back housing 130 (see figures 1 and 2), or with the front housing 120 and back housing 130. For this purpose, the (housing) interference fit is adapted to keep the first printed circuit board 141 tightly clamped in the direction parallel to the longitudinal axis O, or perpendicular to the first and second surfaces 141a, 141b of the first printed circuit board 141. The (housing) interference fit is configured to attach at least a portion of the front housing 120 and a portion of the back housing 130 that are overlapped on top of one another according to a direction perpendicular to the longitudinal axis O. This is, as explained, at least a portion of the lateral portion 129 and a portion of the side portion 139 is overlapped on top of one another according to a direction substantially perpendicular to the clamping pressure provided on the first printed circuit board carrier 141.

Figure 11 shows that the first printed circuit board 141 comprises a first electrically conductive portion 1410a on its first surface 141a. Also, a second electrically conductive portion is provided on its second surface 141b (not shown). Further, the lens assembly 170 or the inner surface 116 of the front housing is adapted for contacting at least the first electrically conductive portion 1410a. Furthermore, (the sidewall 131 of) the back housing 130 is adapted for contacting at least a second electrically conductive portion (not shown). The front housing is electrically connected to the lens assembly 170. In operation, the front and back housings 120, 130 are electrically connected to the first printed circuit board 141. Both the first electrically conductive portion 1410a and the second electrically conductive portion are formed adjacent an edge of the electronics carrier. More in particular, the first and second conductive portions may be made of copper, tin, silver, gold, or a combination thereof and may be of between 0.3 and 2 mm wide, for example, of the order of 0.8 mm wide.

The housing assembly 110 of the present camera module 100 can be assembled efficiently and quickly without screws being required for attaching the front housing 120 and the back housing 130. Consequently, the one or more sidewalls of the front housing 120 and/or the back housing 130 are advantageously thinner. Thus, the amount of material used, and thus overall weight is reduced such that a lighter camera assembly is achieved. Attachment of the front and back housings 120, 130 is carried out without adversely affecting good performance while ensuring good optical alignment of the camera lens assembly 170 and the image sensor 150.

The (housing) interference fit for attaching the front housing 120 and the back housing 130 to each other according to the above examples prevents the electronics carrier 140 from being damaged while ensuring good performance in terms of improved heat dissipation, enhanced electromagnetic influence (EMI), and the above-mentioned optical alignment.

A portion of the lens assembly 170 is arranged within the inner space 115 as stated above. In use, the lens assembly 170 and the electronics carrier 140 are attached either in direct or indirect contact with each other depending on specific requirements through the first adhesive means 800 as depicted in figures 1 to 4.

The first adhesive means 800 for attachment of the lens assembly 170 and the electronics carrier 140 to each other for forming the sub-assembly 170-140 is applied between a bottom portion of the lens assembly 170, e.g., of the lens barrel, and the first printed circuit board 141. More specifically, the first adhesive means 800 is applied between a positioning portion 171 of the camera module, that will be described in detail below, and the first surface 141a. The first adhesive means 800 in this example comprises a 1-3 mm thick layer of glue applied to form a circular ring dispensed in an uncured or at least partially cured state around the above-mentioned bottom portion of the lens assembly 170 such that it is adhesively attached or bonded to the first printed circuit board 141.

The positioning portion 171 is formed in the lens assembly 170, particularly in the lens barrel. The positioning portion 171 is adapted for attaching the lens assembly 170 and the first printed circuit board 141 to each other, wherein the image sensor 150 is at least partially surrounded by the positioning portion 171. In use, the image sensor 150 is coupled to the first printed circuit board 141 and at least partially encapsulated or enclosed by the lens assembly 170 and the first printed circuit board 141. An accurate optimal position of the lens assembly 170 with respect to the image sensor 150 is advantageously ensured.

The positioning portion 171 is formed in a bottom portion of the lens assembly 170, e.g., lens barrel, and projects longitudinally along the optical axis O towards the first printed circuit board 141, as shown in figures 1 to 4 of the drawings.

The lens flange 172 is formed in the lens assembly 170 as shown in figures 1 to 4. The lens flange 172 projects radially outwards from the lens assembly 170, perpendicular to the optical axis O. In particular, the lens flange 172 extends over a portion of an outer perimeter of the lens assembly 170 defining a flat surface. The lens flange 172 may be defined by a continuous surface or by a surface having openings or it may be defined by segments.

In the example of figure 1 and 2, the lens flange 172 acts as a stopper or movement restriction element when the lens assembly 170 and the camera housing 110 are moved to each other during the assembly process, e.g., when the lens assembly 170 is inserted into the housing assembly 110 from below according to figures 1 to 4. In use, the lens flange 172 may be arranged in the inner space 115.

According to a non-limiting example, the lens flange 172 is attached to the inner surface of the housing assembly, either in direct or indirect contact therewith depending on specific requirements. Attachment of the lens assembly 170 to the housing assembly is carried out through the second adhesive means 900 as shown in figure 3. The second adhesive means 900 is applied to surfaces of the lens flange 172, as it will be described below, in contact with the inner surface of the housing assembly. In the non-limiting examples shown, the second adhesive means 900 is a 2-3 mm thick layer of glue applied as described above to form a circular ring of glue dispensed in an uncured or at least partially cured state suitable for adhesively attaching or bonding the lens assembly 170 to the front housing 120. In any case, the second adhesive means 900 is arranged therebetween the inner surface of the housing flange and a portion of the lens flange 172. In turn, the lens flange 172 is arranged therebetween the inner surface of the lens flange and the first surface 141a of the first printed circuit board 141.

Since the same front and back housings 120, 130 having the same sizes can be used for different lens assemblies 170 with different lengths depending on the application. As a consequence, different camera modules having different resolutions and field of views can be used for different applications resulting in significant cost savings. In particular, the camera module of the present invention solves the problem of redesigning a camera housing when said camera module is provided for another application, e.g., a side camera for a top-view application, a front camera for a top-view application, a rear camera for top-view application, a back-up camera, a camera for a digital rear-view mirror (IRMS, CMS), etc.

According to an example, a second printed circuit board 142 may be further provided (see figure 12B). If so, the first printed circuit board 141 is arranged further away from the lens assembly 170 than the second printed circuit board 142. Also, the second surface of the first printed circuit board 141 is arranged further away from the lens assembly 170 than the first surface of the first printed circuit board 141. In turn, the first surface 141a of the first printed circuit board 141 is arranged closer to the image sensor 150 than the second surface 141b of the first printed circuit board 141. Referring still to this example, a connector device may be provided with a board-to-board connector 160 for electrically connecting the first and second printed circuit boards 141, 142 to each other. The board-to-board connector 160 may contribute to the sandwiching effect of the first and second printed circuit boards 141, 142. Thus, the first and/or the second printed circuit boards 141, 142 may be sandwiched between the board-to-board connector 160 and at least one of the front and back housings 120, 130.

With regards to the fixation of the electronics carrier 140 without fasteners, three configurations may be employed:
First: Figure 12A schematically illustrates that the front and back housing 120, 130 are configured such that when they are attached to each other, the front housing 120 contacts at least one portion of the electronics carrier 140. Further, the back housing 130 contacts the surface 141b of the electronics carrier that is not pressed by the front housing 120. This is, the front housing 120 comprises the above-mentioned first contact portion adapted for pressing the first surface 141a of the electronics carrier 140, wherein the back housing 130 comprises the second contact portion adapted for pressing the second surface 141b of the of the electronics carrier. The lens flange 172 of the lens assembly 170 abuts, e.g., is attached to, the outer surface of the front housing 120.
Second: Figure 12B schematically illustrates that the electronics carrier 140 comprises the first printed circuit board 141 and the second circuit board 142 spaced apart along the longitudinal axis O. Both printed circuit boards 141, 142 are connected by a board-to-board connector 160 or spaced apart by the spacer 149. The spacer 149 may be any device or component adapted for fixing at least two printed circuit boards to each other being spaced apart along the longitudinal axis O. The front and back housings 120, 130 are configured such that when they are attached to each other, the front housing 120 contacts at least one portion of the first printed circuit board 141. Further, the back housing 130 contacts at least one portion of the second printed circuit board 142. In any case, the first printed circuit board 141 is sandwiched by the front housing 120 and the board-to-board connector 160 or the spacer 149. This is, the front housing comprises the above-mentioned first contact portion adapted for pressing the first surface 141a of the printed circuit board 140, wherein the board-to-board connector 160 or the spacer 149 comprises the second contact portion adapted for pressing the second surface 141b of the first printed circuit board 140. The lens flange 172 abuts, e.g., is attached to, the outer surface of the front housing 120. In turn, the second printed circuit board 142 is sandwiched by the back housing 130 and the board-to-board connector 160 or the spacer 149.
Third: Figure 12C schematically illustrates that the lens assembly 170 and the electronics carrier 140, e.g., the first printed circuit board 141, are attached to each other. The lens flange 172 abuts, e.g., is attached to, the inner surface 116 of the front housing 120. Preferably, the lens flange 172 abuts the inner surface 116 of the housing flange of the front housing 120. In this way, the housing flange of the front housing 120 acts as a stopper when moving the lens assembly 170 and the front housing 120 to each other during the assembly process of the camera module.

For assembling the camera module, the following method is proposed:
- coupling an image sensor 150 to a first printed circuit board 141;
- providing a first adhesive means 800 on at least one of a positioning portion 171 of a lens assembly 170 and the first printed circuit board 141;
- attaching the lens assembly 170 and the first printed circuit board 141 to each other so as to establish an optical communication between the lens assembly 170 and the image sensor 150;
- placing the first printed circuit board 141 to a back housing 130;
- providing a connector device 160, e.g., electrically connecting the first printed circuit board 141 and a second printed circuit boards 142 to each other;
- providing a second adhesive means 900 on at least one of a lens flange 172 of the lens assembly 170 and an inner surface 116 of a front housing 120;
- attaching the lens assembly 170 to the front housing 120;
- providing an elastic means 300 abutting an overlap portion of the front housing 120 and the back housing 130 such that the deformable means 300 is deformed in a direction perpendicular to the longitudinal axis O when abutting the front and back housings 120, 130;
- moving the front housing 120 and the back housing 130 relative to each other along a longitudinal axis O; and
- attaching the front housing 120 and the back housing 130 to each other by an interference fit such that the first printed circuit board 141 is preferably arranged tightly sandwiched by a first contact portion and a second contact portion, wherein
   the first contact portion is part of or attached to the front housing 120 or the lens assembly 170, and wherein
   the second contact portion is part of or attached to at least of one of the back housing 130, the connector device 160, and a spacer 149.

Although only a number of examples of the present electronic device and assembly method thereof have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow. Reference signs related to drawings placed in parentheses in a claim are solely for attempting to increase the intelligibility of the claim, and shall not be construed as limiting the scope of the claim.

## Claims

1. An electronic device comprising:
- a housing assembly (110) comprising a first housing part (120) and a second housing part (130) configured to be attached to each other; and
- an electronics carrier (140) received within an inner space (115) of the housing assembly (110) defined when the first and second housing parts (120, 130) are attached to each other,
**characterized in that** the first housing part (120) and the second housing part (130) are attached to each other by an interference fit.

2. The electronic device of claim 1, wherein the housing assembly (110) extends along a longitudinal axis (O), wherein the first housing part (120) comprises a first overlap portion (111), wherein the second housing part (130) comprises a second overlap portion (112) which overlaps the first overlap portion (111) in a direction perpendicular to the longitudinal axis (O), and wherein the interference fit extends along an interface surface (I) defined by the first and second overlap portions (111, 112) when in contact.

3. The electronic device of claim 2, wherein the first housing part (120) comprises a lateral portion (129) that includes the first overlap portion (111), and wherein the second housing part (130) comprises a side portion (139) that includes the second overlap portion (112) such that, in use, the interference fit is obtained by a contact between the lateral portion (129) and the side portion (139), the interface surface (I) being parallel to the longitudinal axis (O).

4. The electronic device of claims 2-3, wherein the first overlap portion (111) comprises an outer lateral surface (126) of the first housing part (120) and an inner lateral surface (125b) of the first housing part (120), wherein the second overlap portion (112) comprises an outer side surface (135) of the second housing part (130) and an inner side surface (136b) of the second housing part (130), wherein the interference fit is obtained by the contact between:
- the outer lateral surface (126) of the first housing part (120) and the inner side surface (136b) of the second housing part (130); or
- the outer side surface (135) of the second housing part (130) and the inner lateral surface (125b) of the first housing part (120).

5. The electronic device of claims 3-4, wherein the lateral portion (129) comprises a first straight lateral surface (129') parallel to the longitudinal axis (O) and a second straight lateral surface (129") parallel to the first straight lateral surface (129'), wherein both first and second straight lateral surfaces (129', 129") include the first overlap portion (111); and wherein the side portion (139) comprises a first straight side surface (139') parallel to the longitudinal axis (O) and a second straight side surface (139") parallel to the first straight side surface (139'), wherein both first and second straight side surfaces (139', 139") include the second overlap portion (112).

6. The electronic device of claims 2-5, wherein the first housing part (120) and/or the second housing part (130) further comprises one or more contact elevations (119) that comprises the interface surface (I), wherein the one or more contact elevations (119) project radially relative to the longitudinal direction (O), preferably extending in a direction along the longitudinal axis (O).

7. The electronic device of any claim 2-6, wherein a length (L) of the interface surface(I) along the longitudinal direction (O) is of between two and ten millimeters.

8. The electronic device of any of claims 4-7, wherein a gap (200) is defined between:
- the outer lateral surface (126) of the first housing part (120) and the inner side surface (136b) of the second housing part (130); or
- the outer side surface (135) of the second housing part (130) and the inner lateral surface (125b) of the first housing part (120).

9. The electronic device of claim 8, wherein the first overlap portion (111) and/or the second overlap portion (112) includes a region (199) that extends perpendicular to the longitudinal axis (O) such that, in use, the lateral portion (129) and the side portion (139) define the gap (200).

10. The electronic device of any preceding claims, wherein it further comprises an elastic means (300) adapted for being deformed at least in a direction perpendicular to the longitudinal axis (O), wherein at least a portion of the elastic means (300) is arranged between the interference fit and a plane XY that contains the electronics carrier (140), preferably the elastic means (300) being arranged in the gap (200).

11. The electronic device of any of the preceding claims is a camera module for vehicles, wherein it further comprises a lens assembly (170) defining an optical axis and in optical communication to an image sensor (150) coupled to the electronics carrier (140) so as to acquire a captured image.

12. The electronic device of claim 11, wherein the lens assembly (170) is attached to the electronics carrier (140).

13. The electronic device of any of the claims 11-12, wherein the lens assembly (170) further comprises a lens flange (172) projecting radially outwards from the lens assembly (170) perpendicular to the longitudinal axis (O), with the lens flange (172) and an inner surface (116) of the housing assembly (110) capable of being attached to each other.

14. The electronic device of any of the preceding claims, wherein, in use, the electronics carrier (140) is arranged tightly sandwiched preferably by a first contact portion and a second contact portion, wherein the first contact portion is part of or attached to the first housing part (120) or the lens assembly (170), and wherein the second contact portion is part of or attached to at least of one of the second housing part (130), a connector device (400), and a spacer (149).

15. A method for assembling an electronic device (100), the method comprises moving the first housing part (120) and the second housing part (130) relative to each other along a longitudinal axis (O) such that first housing part (120) and the second housing part (130) are attached to each other by an interference fit, an electronics carrier (140) being received within an inner space (115) defined when the first and second housing parts (120, 130) are attached to each other.
